# EUROPEAN PATENT APPLICATION

(11) **EP 4 715 997 A1**
(43) Date of publication of application: **25.03.2026**
(21) Application number: 24823582.2
(22) Date of filing: 09.05.2024
(51) Int. Cl.: H01M 50/516, H01M 50/569, H01M 50/502

(54) **BATTERY MODULE AND ASSEMBLY METHOD THEREFOR**

(30) Priority: 12.06.2023 KR 20230074995
(71) Applicant: SK On Co., Ltd., Seoul 03161 (KR)
(72) Inventor: NAM, Deok Ho, Daejeon 34124 (KR); KIM, Ye Eun, Daejeon 34124 (KR); NOH, Yun Joo, Daejeon 34124 (KR); YOON, Jun Seo, Daejeon 34124 (KR)
(74) Representative: Prüfer & Partner mbB Patentanwälte · Rechtsanwälte
(86) International application number: PCT/KR2024/006242
(87) International publication number: WO 2024/258061

(57) **Abstract**

The present disclosure relates to a battery module and an assembly method therefor, the battery module comprising: a plurality of battery cells stacked in one direction; a busbar electrically connected to the plurality of battery cells stacked in the one direction; a sensing unit electrically connected to the busbar in order to detect the voltage of the plurality of battery cells; and a sensing terminal unit provided between the sensing unit and the busbar so as to electrically connect the busbar and the sensing unit. The sensing terminal unit comprises: a coupling unit positioned so as to face at least a portion of the busbar; and a plurality of welding regions for coupling the coupling unit and the sensing terminal unit when the sensing terminal unit and the busbar are welded.

## Description

### BACKGROUND OF THE INVENTION

### [Field]

This disclosure relates to a battery module and an assembly method therefor. More specifically, it relates to a battery module joined by welding and an assembly method therefor.

### [Description of the Related Art]

A battery module may include a sensing terminal unit for measuring the voltage and/or temperature of a plurality of battery cells included in the battery module.

Typically, the sensing terminal unit and busbar, formed from different metallic materials, have utilized seam welding for electrical connection. However, welding dissimilar metals can result in a joint strength that is relatively lower compared to welding the same material. Furthermore, the width of the wire-shaped weld bead formed during seam welding is relatively small compared to its length. Consequently, stress concentration patterns may occur at the welding region, not only under simple tensile or shear forces but also under bending, torsion twist forces. This can lead to potential failure of the sensing terminal unit or busbar.

On the other hand, while increasing the weld length could improve weld strength, the limited size of the sensing terminal unit makes increasing the weld length difficult.

### [Detailed Description of the Invention]

### [Technical Problem]

First, the present disclosure addresses the challenge of enhancing the weld strength between the sensing terminal unit and the welded portion.

Second, the present disclosure addresses the challenge of enhancing weld strength within the limited size of the sensing terminal unit.

Third, the present disclosure addresses the challenge of ensuring close contact between the sensing terminal unit and the welded portion during welding.

Fourth, the present disclosure addresses the challenge of reducing the scattering of spatter that may occur during welding.

Meanwhile, the battery module according to this disclosure can be widely applied in green technology fields such as electric vehicles, battery charging stations, energy storage systems, and other battery-utilizing technologies like photovoltaics and wind power. Furthermore, the battery module according to this disclosure can be used in eco-friendly mobility, including electric vehicles and hybrid vehicles, to prevent climate change by suppressing air pollution and greenhouse gas emissions.

### [Technical solutions]

A battery module according to an embodiment of the present disclosure may comprise: a plurality of battery cells stacked along one direction; a busbar electrically connected to the plurality of battery cells stacked along the one direction; a sensing unit electrically connected to the busbar for detecting the voltage of at least one battery cell among the plurality of battery cells; and a sensing terminal unit provided between the sensing unit and the busbar, electrically connecting the busbar and the sensing unit; wherein the sensing terminal unit may include a coupling portion positioned to face at least a portion of the busbar and a plurality of welding regions connecting the coupling portion and the sensing terminal unit.

Further, a plurality of welding beads may be formed on the outside of the coupling portion corresponding to the plurality of welding regions when welding the coupling portion and the busbar.

Further, a plurality of welding beads may be formed at positions corresponding to the plurality of welding regions during welding and protrude outward from the coupling portion.

Further, the plurality of welding beads may be positioned spaced apart from each other.

Further, the plurality of welding regions may include: a plurality of transverse welding regions arranged at a preset transverse interval along the one direction, and at least one longitudinal welding region arranged at a preset longitudinal interval in at least one of the plurality of transverse welding regions along the height direction of the busbar.

Further, the size of the transverse interval and the size of the longitudinal interval may be the same.

Further, a plurality of transverse welding beads may be formed on the outside of the coupling portion at the transverse interval corresponding to the plurality of transverse welding regions when the sensing terminal unit and the busbar are welded, and at least one longitudinal welding bead may be formed on the outside of the coupling portion at the longitudinal interval corresponding to the at least one longitudinal welding region when the sensing terminal unit and the busbar are welded.

Further, the plurality of welding regions may be arranged in a polygonal shape with the centers of the plurality of welding regions as respective vertices.

Further, the plurality of welding regions may be arranged in a grid pattern with the plurality of welding regions as vertices.

Further, the busbar may include a first busbar and a second busbar provided on both sides of the battery cell; the sensing unit may include a first wire electrically connected to the first busbar and a second wire electrically connected to the second busbar; the sensing terminal unit may include a first sensing terminal connected to the first busbar by welding and a second sensing terminal connected to the second busbar by welding; and the plurality of welding regions may include a plurality of first welding regions joined together when the first sensing terminal and the first busbar are welded, and a plurality of second welding regions joined together when the second sensing terminal and the second busbar are welded.

Further, a plurality of first welding beads may be formed on the outside of the first sensing terminal corresponding to the plurality of first welding regions when the first sensing terminal and the first busbar are welded, and a plurality of second welding beads may be formed on the outside of the second sensing terminal corresponding to the plurality of second welding regions when the second sensing terminal and the second busbar are welded.

Further, the plurality of first welding regions and the plurality of second welding regions each may include: a plurality of transverse welding regions arranged at a preset transverse interval along the one direction, and at least one longitudinal welding region arranged at a preset longitudinal interval in at least one of the plurality of transverse welding regions along the height direction of the busbar.

Further, the first sensing terminal and the second sensing terminal each may include: a plurality of transverse welding beads formed at the transverse intervals corresponding to the plurality of transverse welding regions on the outside of each of the first sensing terminal and the second sensing terminal when the first sensing terminal and the first busbar are welded or when the second sensing terminal and the second busbar are welded; and a plurality of longitudinal welding beads formed at the longitudinal intervals corresponding to the plurality of longitudinal welding regions on the outside of each of the first sensing terminal and the second sensing terminal when the first sensing terminal and the first busbar are welded or when the second sensing terminal and the second busbar are welded.

Further, the busbar may include a plurality of busbar plates electrically connecting a preset number of battery cells among the plurality of battery cells as a group, and the plurality of busbar plates are arranged along the one direction.

Further, the sensing terminal unit may be provided in a plurality corresponding one-to-one to the plurality of busbar plates.

Further, the sensing unit may include a flexible printed circuit board.

An assembly method of a battery module according to another embodiment of the present disclosure may comprise: a busbar connecting step of stacking the plurality of battery cells along the one direction and connecting the plurality of battery cells to the busbar; a sensing unit arranging step of arranging the sensing unit on the plurality of battery cells coupled to the busbar; a jig arranging step of moving a welding jig toward a coupling portion positioned to face at least a portion of the busbar among the sensing terminals and contacting the welding jig with the coupling portion; and a welding step of welding the coupling portion and the busbar using the welding jig; wherein the welding step may include welding the coupling portion and the busbar such that a plurality of joint regions by the welding are arranged at a preset interval.

Further, the assembly method of a battery module may further comprise: a jig separating step of separating the welding jig from the coupling portion after the welding step is completed.

Further, the assembly method of a battery module may further comprise: a positioning step of overlapping at least a portion of the busbar and the coupling portion for welding the coupling portion and the busbar prior to the jig arranging step.

### [Effect]

First, the present disclosure enhances the weld strength between the sensing terminal unit and the welded portion, enabling it to withstand bending, torsion or twist.

Second, the present disclosure enhances the weld strength within the limited welding region of the sensing terminal unit, enabling stable battery cell voltage measurement without damage from external vibrations or impacts.

Third, the present disclosure may apply pressure between the sensing terminal unit and the welding region during welding.

Fourth, the present disclosure prevents spatter dispersion and misalignment of the welding region between the sensing terminal unit and the busbar during welding.

### [Description of the drawing]

FIG. 1 is an example of a battery module described in the present disclosure.
FIG. 2 is an example of a busbar assembly including a busbar and a busbar frame.
FIG. 3 is an example of a sensing unit according to the present disclosure.
FIG. 4 shows an example of the disassembled busbar frame, busbar, and sensing terminal unit.
FIG. 5A illustrates an example of the coupled busbar frame, busbar, and sensing terminal unit. FIG. 5B shows an enlarged view of a plurality of welding beads formed on the coupling portion during welding.
FIG. 6 illustrates the sensing unit, sensing terminal unit, and welding jig.
FIG. 7 illustrates an example of the welding jig applying pressure to the coupling portion and the busbar for welding.
FIGS. 8A to 8C schematically illustrate various shapes of the plurality of welding beads formed on the coupling portion.
FIG. 9 is a flowchart schematically illustrating an example of an assembly method for the battery module.

### [Embodiments]

The following describes in detail a preferred embodiment of the present disclosure with reference to the accompanying drawings. The configuration of the apparatus and the control method described below are intended only to explain the embodiment of the present disclosure and are not intended to limit the scope of the present disclosure. Reference numbers used throughout the specification denote the same components.

The battery cell described herein refers to a secondary battery capable of charging and discharging electrical energy for use. For example, it may refer to a lithium secondary battery, or a lithium-ion battery. Another example may refer to a solid-state battery. Using a lithium secondary battery as an example, the main components of the battery cell may include a positive electrode, a negative electrode, a separator, and an electrolyte. The battery cell may further include a lead tab protruding outside the pouch, connected to the positive electrode and negative electrode respectively for electrical connection to the outside.

Meanwhile, the battery module described herein refers to a battery assembly formed by bundling one or more of the battery cells to protect them from external impacts, heat, vibration, etc., and then placing them within a case. The battery assembly connects to a busbar assembly housed internally via external connection wires, enabling it to supply electricity externally or receive electricity externally for storage within the battery cells.

Furthermore, a battery pack refers to a single set comprising a predetermined number of the aforementioned battery modules assembled together to achieve the desired final voltage or power.

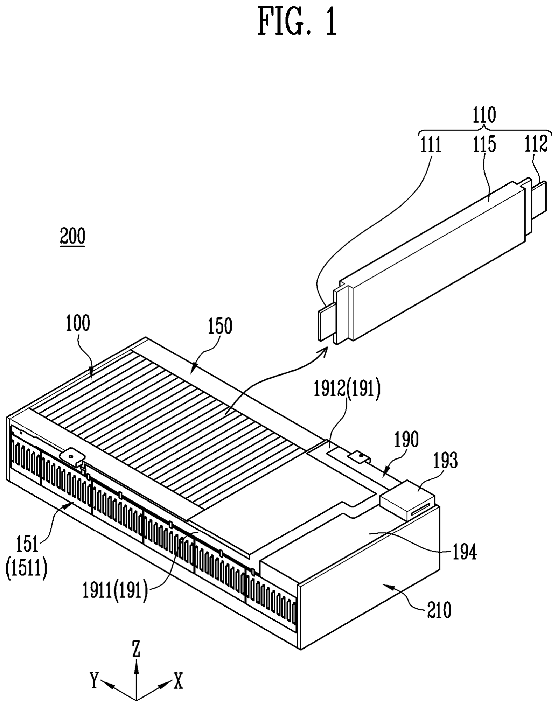

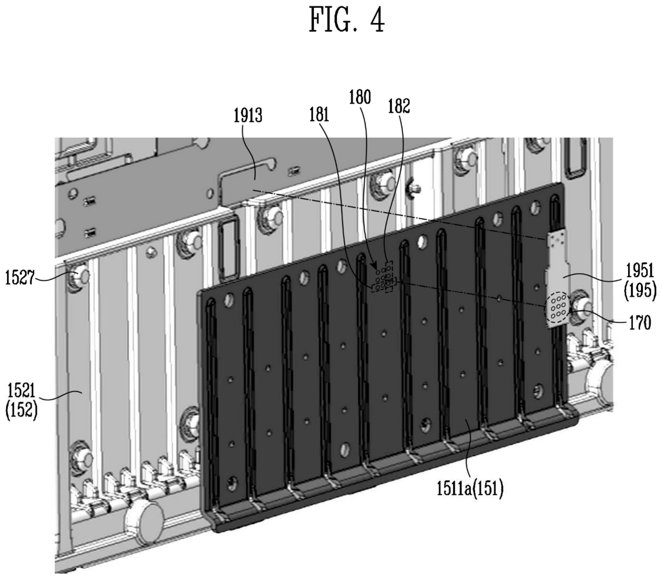

FIG. 1 is an example of a battery module 200 described in the present disclosure. The battery module 200 comprises a plurality of battery cells 110 stacked along one direction, e.g., the Y-direction, a busbar 151 electrically connected to the plurality of battery cells 110 stacked along the one direction, and a sensing unit 191 electrically connected to the busbar 151 for detecting the voltage of at least one battery cell 110 among the plurality of battery cells 110, and a sensing terminal unit 195, referring to FIG. 4, provided between the sensing unit 191 and the busbar 151, electrically connect the busbar 151 and the sensing unit 191.

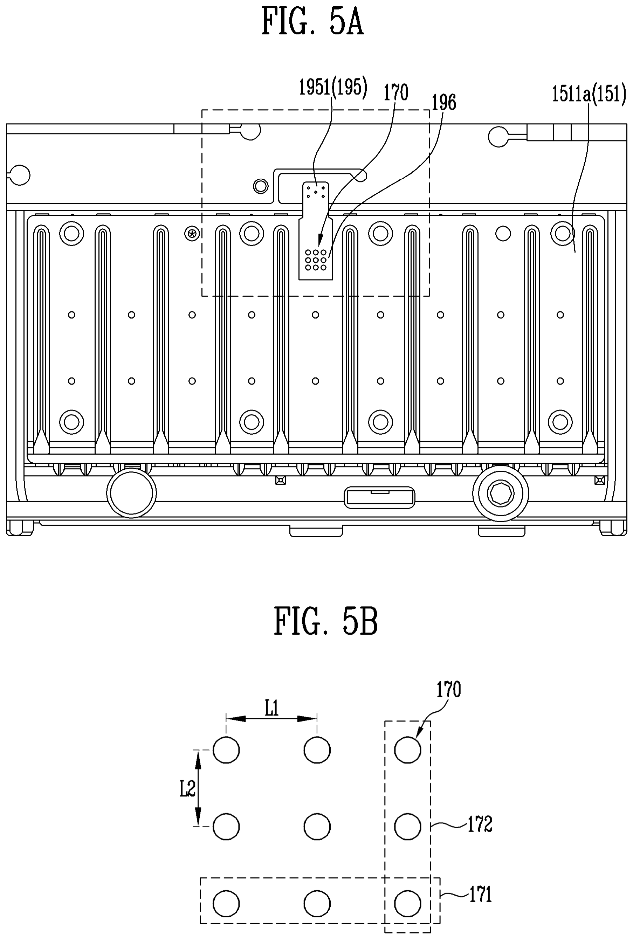

The sensing terminal unit 195 includes a coupling portion 196, referring to FIG. 5, positioned to face at least a portion of the busbar 151, and a plurality of welding regions 180, referring to FIG. 4, connecting the coupling portion 196 and the sensing terminal unit 195. The plurality of welding regions 180 are regions where the sensing terminal unit 195 and the busbar 151 are joined by welding.

Specific examples of the welding include ultrasonic welding using ultrasound or laser welding using a laser.

The battery cell 110 may include a main body 115 for storing or generating electrical energy, and lead tab portions 111, 112 protruding outwardly from the main body and electrically connected to the busbar 151. The lead tab portions each have a positive electrode and a negative electrode and may protrude in the same direction from one side of the main body 115. Referring to FIG. 1, the battery cell 110 according to the present disclosure may include a first lead tab portion 111 and a second lead tab portion 112 with the lead tab portions 111, 112 protruding in opposite directions.

The plurality of battery cells 110 may be pouch-type secondary batteries, but are not limited thereto, and may also be prismatic or cylindrical.

The plurality of battery cells 110 may be stacked in one direction, and the lead tab portions 111, 112 of each of the plurality of battery cells 110 may be electrically connected to the busbar 151 to form a single cell stack 100.

The main body 115 may include a positive electrode plate, a negative electrode plate, a separator, and an electrolyte. Specifically, the main body 115 may include an electrode assembly (not shown). The electrode assembly alternately places a separator between the positive electrode plate and the negative electrode plate, positioning the separator between the positive and negative electrode plates to form a power generation element wound in a spiral configuration.

Additionally, the electrode assembly may be stacked by sequentially arranging the positive electrode plate, separator, and negative electrode plate.

The first lead tab portion 111 and the second lead tab portion 112 may each be connected to the positive electrode and the negative electrode, respectively, and may protrude for connection to the outside. The first lead tab portion 111 and the second lead tab portion 112 may each be provided as a positive terminal and a negative terminal, respectively, serving as terminals for electrically connecting to other battery cells 110 or external devices, such as a busbar assembly 150.

If the first lead tab portion 111 and the second lead tab portion 112 are respectively the positive terminal and the negative terminal, the first lead tab portion 111 and the second lead tab portion 112 will be electrically connected to the positive plate and the negative plate, respectively. The first lead tab portion 111 and the second lead tab portion 112 may protrude in a direction perpendicular to the stacking direction (Y-direction) in which the plurality of battery cells 110 are stacked.

The first lead tab portion 111 and the second lead tab portion 112 may be formed from different materials having excellent electrical conductivity.

Meanwhile, the cell stack 100 may include a busbar 151 positioned on the outer side of the first lead tab portion 111 and the second lead tab portion 112 and electrically connected to the first lead tab portion 111 and the second lead tab portion 112.

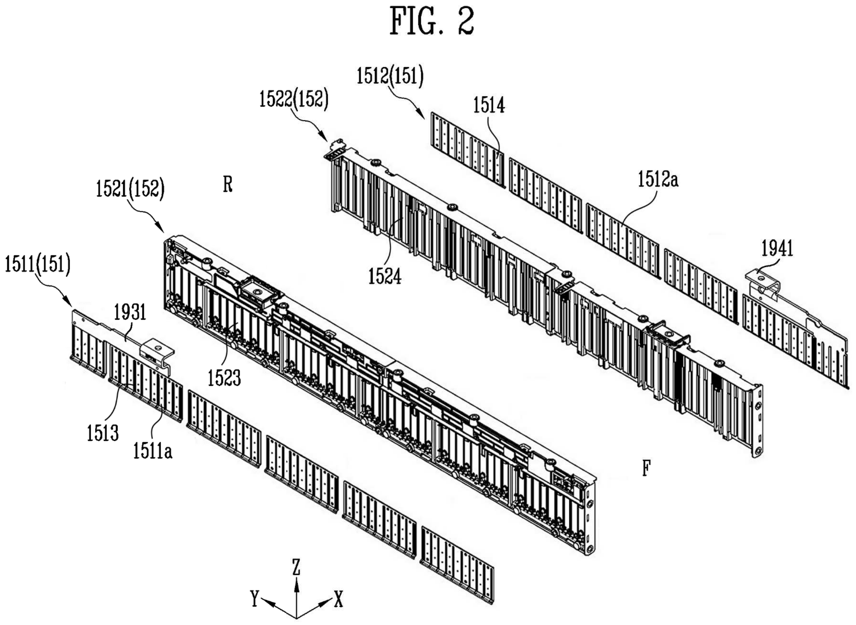

Additionally, the cell stack 100 may further include a busbar frame 152, referring to FIG. 2, that supports and faces the busbar 151. The busbar frame 152 may be provided with an insulating material to electrically insulate between the main body 115 and the busbar 151.

Meanwhile, the busbar 151 and the busbar frame 152 together may be referred to as a busbar assembly 150.

That is, the busbar assembly 150 may be provided to electrically connect the plurality of battery cells 110 to the outside. For example, a first busbar 1511, referring to FIG. 2, electrically connected to each first lead tab portion 111 of the plurality of battery cells 110, and a first busbar frame 1521, referring to FIG. 2, supporting the first busbar 1511, a second busbar 1512, referring to FIG. 2, electrically connected to each second lead tab portion 112 of the plurality of battery cells 110, and a second busbar frame 1522, referring to FIG. 2, supporting the second busbar 1512.

Meanwhile, the battery module 200 includes a sensing unit 191 provided to measure the voltage of the plurality of battery cells 110 and a sensing terminal unit 195 that electrically connects the sensing unit 191 and the busbar 151. The voltage of the plurality of battery cells 110 refers to the voltage applied to the plurality of battery cells 110 during charging and discharging.

The sensing unit 191 and the sensing terminal unit 195 may measure the total voltage of the plurality of battery cells 110, the individual voltage of each of the plurality of battery cells 110, or the voltage of a group of battery cells 110 among the plurality of battery cells 110.

Therefore, the sensing unit 191 will be electrically connected to at least one battery cell 110.

Additionally, the sensing unit 191 and the sensing terminal unit 195 may also measure the temperature of the plurality of battery cells 110.

Meanwhile, a sensing part 190 may be referred to as including the sensing unit 191 and the sensing terminal unit 195.

As described above, the busbar 151 may include a first busbar 1511 and a second busbar 1512 that correspond to lead tab portions protruding from both sides of the main body 115 and extend in one direction (Y direction) in which the plurality of battery cells are stacked from each side of the main body 115.

In this case, the sensing unit 191 can electrically interconnect the first busbar 1511 and the second busbar 1512, and the sensing terminal unit 195 may include a first sensing terminal 1951, referring to FIG. 4, connecting the first busbar 1511 and the sensing unit 191, and a second sensing terminal (not shown) connecting the second busbar 1512 and the sensing unit 191. The second sensing terminal is identical to the first sensing terminal 1951 except for its connection location and is therefore omitted.

The sensing unit 191 may further include an external connection terminal 193 for connection to an external control unit, such as a Battery Management System.

Meanwhile, the sensing unit 191 may include a flexible printed circuit board formed from a flexible material to efficiently utilize confined spaces. Therefore, the sensing unit 191 may be positioned on top of the cell stack 100. To support the sensing unit 191, the battery module 200 may include a plate-shaped support unit 194.

The support member 194 is positioned between the sensing unit 191 and the cell stack 100 and may be connected to the busbar frame 152. The support member 194 may distribute external forces applied to the sensing unit 191 using the busbar frame 152.

Referring to FIG. 1, the support member 194 connects the first busbar frame 1521 and the second busbar frame 1522 and may be positioned on the top of the cell stack 100.

Meanwhile, the battery module 200 may further include a module case (not shown) that accommodates the cell stack 100. The module case protects the cell stack 100 and may expose terminal portions 1913, 1914, referring to FIG. 2, to the exterior of the module case for electrically connecting the cell stack 100 to the outside.

FIG. 2 is an example of a busbar assembly 150 including a busbar 151 and a busbar frame 152.

The busbar assembly 150 may be provided for electrical connection between a plurality of battery cells 110 and the exterior.

The busbar assembly 150 extends along the direction in which the plurality of battery cells 110 are stacked, a first busbar 1511 and a second busbar 1512 positioned on both sides of the plurality of battery cells 110 and electrically connected to a first lead tab portion 111 or a second lead tab portion 112 of each of the plurality of battery cells 110, a first busbar frame 1521 supporting the first busbar 1511, and a second busbar frame 1522 supporting the second busbar 1512.

The plurality of battery cells 110 will be connected in series or in parallel to generate a predetermined target voltage in a single battery module 200. Therefore, the positions of the first lead tab portion 111 and the second lead tab portion 112 of each of the plural battery cells 110 in the cell stack 100 may not all be oriented in the same direction.

For example, if the first lead tab portion 111 is the positive electrode, and the second lead tab portion 112 is the negative electrode, then in some battery cells 110, the positions of the first lead tab portion 111 and the second lead tab portion 112 may be arranged in the opposite direction to the positions in the remaining battery cells 110.

Referring to FIG. 2, for convenience in this disclosure, the direction in which the external connection terminal 193 is located is set as the front F, and the opposite side is set as the rear R.

The busbar assembly 150 may include a busbar 151 extending along the direction in which the plurality of battery cells 110 are stacked to electrically connect the plurality of battery cells 110 to the outside, and a busbar frame 152 that is provided to face the busbar 151 and supports the busbar 151.

Specifically, referring to FIGS. 1 and 2, the busbar assembly 150 includes a first busbar 151 extending along the stacked direction of the plurality of battery cells 110 to connect to either a first lead tab portion 111 or a second lead tab portion 112 positioned on both sides of the plurality of battery cells 110, a first busbar 1511 and a second busbar 1512 extending along the stacked direction of the plurality of battery cells 110 from both sides of the plurality of battery cells 110, a first busbar frame 1521 extending along the stacked direction of the plurality of battery cells 110, positioned to face the first busbar 1511 and supporting the first busbar 1511, and a second busbar frame 1522 extending along the stacked direction of the plurality of battery cells 110, positioned to face the second busbar 1512 and supporting the second busbar 1512.

The first busbar frame 1521 may include a first insertion hole (not shown) extending in the height direction of the battery module 200 to allow insertion of either the first lead tab portion 111 or the second lead tab portion 112. After either the first lead tab portion 111 or the second lead tab portion 112 is inserted, it will be electrically connected to the first busbar 1511 through the first insertion hole.

The first busbar frame 1521 may be formed from an insulating material. This is to electrically insulate the space between the main body 115 and the first busbar 1511.

The first busbar 1511 is electrically connected to either the first lead tab portion 111 or the second lead tab portion 112, and may include a plurality of first busbar plates 1511a arranged parallel to the first busbar frame 1521.

That is, the plural first busbar plates 1511a may be arranged along the direction in which the plural battery cells 110 are stacked to form the first busbar 1511. The plural first busbar plates 1511a may each have a plate shape.

Any one of the plurality of first busbar plates 1511a may include a first through hole 1513 penetrating the one first busbar plate 1511a. Either the first lead tab portion 111 or the second lead tab portion 112 will be inserted into the first through hole 1513 to be electrically connected to the first busbar 1511.

As described above, the arrangement of the first lead tab portion 111 and the second lead tab portion 112 may vary to connect the plurality of battery cells 110 in series or in parallel. Accordingly, each of the plurality of first busbar plates 1511a may also have a different electrical polarity.

The second busbar frame 1522 may include a second insertion hole (not shown) extending along the height direction of the battery module 200 to allow insertion of either the first lead tab portion 111 or the second lead tab portion 112. After insertion of the other lead tab portion either the first lead tab portion 111 or the second lead tab portion 112, it will be electrically connected to the second busbar 1512 through the second insertion hole.

Similarly, the second busbar frame 1522 may be formed from an insulating material. This is to electrically insulate the space between the main body 115 and the second busbar 1512.

The second busbar 1512 is electrically connected to one of the first lead tab portion 111 or the second lead tab portion 112, and may include a plurality of second busbar plates 1521a arranged parallel to the second busbar frame 1522.

That is, the plurality of second busbar plates 1521a may be arranged along the direction in which the plurality of battery cells 110 are stacked to form the second busbar 1512. The plurality of second busbar plates 1521a may each have a plate shape.

Any one of the plurality of second busbar plates 1521a may include a second through hole 1514 penetrating the one second busbar plate 1521a. The other lead tab portion of the first lead tab portion 111 or the second lead tab portion 112 will be inserted into the second through hole 1514 to be electrically connected to the second busbar 1512.

The first busbar 1511 and the second busbar 1512, the first busbar plate 1511a and the second busbar plate 1521a, and the first busbar frame 1521 and the second busbar frame 1521 may each be positioned on opposite sides of the main body 115.

As described above, the arrangement of the first lead tab portion 111 and the second lead tab portion 112 may vary to connect the plurality of battery cells 110 in series or in parallel. Accordingly, each of the plurality of second busbar plates 1521a may also have different electrical polarities.

Considering that the material of the first busbar frame 1521 is a polymer material having electrical insulation properties, and the first busbar 1511 is a metal material with excellent electrical conductivity, the first busbar frame 1521 and the first busbar 1511 may be combined using a method called thermal bonding. Alternatively, the first busbar 1511 may be inserted in advance and combined during the injection molding of the first busbar plate 1511a. However, this is not limited to these methods, other combining methods for the first busbar frame 1521 and the first busbar 1511 may also be employed.

Similarly, considering that the material of the second busbar frame 1522 is a polymer material having electrical insulation properties and the second busbar 1512 is a metal material with excellent electrical conductivity, the second busbar frame 1522 and the second busbar 1512 may be combined using a method called thermal bonding. Alternatively, the second busbar 1512 be inserted in advance and combined during the injection molding of the second busbar plate 1521a. However, this is not limited to these methods, other combining methods for the second busbar frame 1522 and the second busbar 1512 may also be employed.

Meanwhile, the busbar assembly 150 may further include a first terminal portion 1931 electrically connecting the first busbar 1511 to the outside and a second terminal portion 1932 electrically connecting the second busbar 1512 to the outside for electrical connection to the outside.

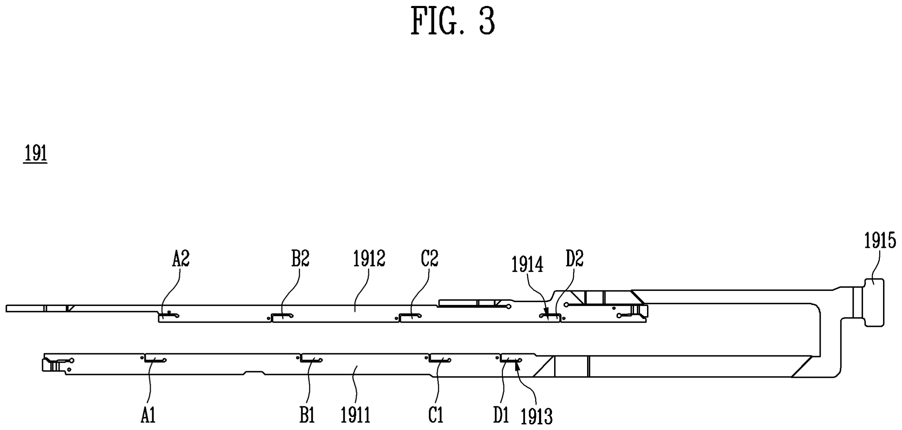

FIG. 3 is an example of a sensing unit 191 according to the present disclosure.

Specifically, the sensing unit 191 may include a first wire 1911 and a second wire 1912 extending along the stacking direction of the plurality of battery cells 110. The material of the first wire 1911 and the second wire 1912 may have flexible properties. This is to efficiently utilize the compact space inside the module case (not shown). That is, corresponding to the shape of the compact space, the first wire 1911 and the second wire 1912 can be bent as needed.

The first wire 1911 and the second wire 1912 are positioned at the front of the battery module 200, and may be connected to the external connection terminal 193. For this purpose, the sensing unit 191 may include a connector 1915 for connecting the first wire 1911 and the second wire 1912 to the external connection terminal 193.

The first wire 1911 may include a first connection portion 1913 for electrically connecting to the sensing terminal unit 195, specifically, the first sensing terminal 1951. Similarly, the second wire 1912 may include a second connection portion 1914 for electrically connecting to the sensing terminal unit 195, specifically, the second sensing terminal (not shown).

The first connection portion 1913 and the second connection portion 1914 may each be provided in a plurality. FIG. 3 illustrates an example of regions A1, B1, C1, D1 where the first connecting portion is provided in the same number as the plurality of sensing terminal units 195 on the first wire 1911 to be connected one-to-one to each of the plurality of sensing terminal units 195. FIG. 3 also illustrates an example of regions A2, B2, C2, D2 where the second connecting portion is provided in the same number as the plurality of sensing terminal unit 195 on the second wire 1912 to be connected one-to-one to each of the plurality of sensing terminal units 195.

Meanwhile, the shapes of the first wire 1911 and the second wire 1912 may be asymmetrical to each other. This is because the positions of the first sensing terminals 1951 connected to the first busbar 1511 and the second sensing terminals connected to the second busbar 1512 may differ from each other.

Meanwhile, the number of the plural first sensing terminals 1951 will be the same as the number of the plural first connection portions 1913. The number of the plural second sensing terminals will be the same as the number of the plural second connection portions 1914.

Furthermore, the number of the first sensing terminals 1951 may be equal to the number of the plurality of first busbar plates 1511a. One first sensing terminal 1951 may correspond one-to-one with one first busbar plate 1511a. This is because some battery cells 110 connected to one first busbar plate 1511a among the plurality of battery cells 110 are arranged identically. Similarly, the number of second sensing terminals may be the same as the number of the plurality of second busbar plates 1521a.

FIG. 4 shows an example of the disassembled busbar frame 152, busbar 151, and sensing terminal unit 195. Specifically, it is an example showing the disassembled busbar frame 152, one of the plurality of first busbar plates 1511a, and one of the plurality of first sensing terminals 1951. Unless otherwise specified, the remaining first busbar plates 1511a, the remaining first sensing terminals 1951, the plurality of second busbar plates 1521a, and the plurality of second sensing terminals will similarly be connected, therefore, identical repetitive descriptions are omitted.

Referring to FIG. 4, the first busbar frame 1521 may further include a coupling protrusion 1527 projecting toward the first busbar 1511. The first busbar 1511 and the first busbar frame 1521 may be fixed together by thermal bonding the coupling protrusions 1527 after the first busbar 1511 contacts the first busbar frame 1521.

Referring to FIG. 4, the first busbar plate 1511a, which forms a portion of the first busbar 1511, may include a through hole (not shown) penetrating the first busbar plate 1511a at a position corresponding to the coupling protrusion 1527. After the coupling protrusions 1527 are inserted into the through holes, they are thermally welded, thereby fixing the first busbar plate 1511a and the first busbar frame 1521 to each other.

Meanwhile, the battery module 200 electrically connects the sensing unit 191 and the busbar 151, and includes a sensing part 190 for measuring the voltage applied to the plurality of battery cells 110.

Referring to FIG. 4, specifically, the battery module 200 may include a first sensing terminal 1951 that electrically connects the first connection portion 1913 and the first busbar plate 1511a.

The first sensing terminal 1951 may be formed of a conductive material. It may electrically connect the first busbar plate 1511a and the first connection portion 1913 provided on the first wire 1911. Therefore, the sensing unit 191 can detect the voltage of the plurality of battery cells 110. Specifically, the first sensing terminals 1951 may be provided in a plurality equal to the number of first busbar plates 1511a.

Meanwhile, the sensing terminal unit 195 or the first sensing terminal 1951 may be coupled to the first busbar plate 1511a through welding. Typically, welding may be performed using simple spot welding or seam welding methods.

The direction of conventional seam welding may be parallel to the height direction of the battery module 200. In particular, since the length of the seam weld is relatively larger than its width, it may withstand external forces such as tensile or shear forces well, but it has the weakness of being vulnerable to twisting or bending.

To address this, the battery module 200 according to the present disclosure may include a plurality of welding regions 180 that connect the sensing terminal unit 195 to the busbar 151. To illustrate the plurality of welding regions 180, FIG. 4 depicts them as a virtual circular shape on the first sensing terminal 1951 and the first busbar plate 1511a. That is, the plurality of welding regions 180 refer to the regions where the first sensing terminal 1951 and the first busbar plate 1511a are joined by welding.

Referring to FIG. 4, the battery module 200 may include a plurality of welding regions 180 for coupling the first busbar plate 1511a and the first sensing terminal 1951. Specifically, spot welding is used, but the plurality of welding regions 180 may be arranged in a grid pattern or polygonal shape by spot welding.

Referring to FIG. 4, the plurality of welding regions 180 may include a plurality of transverse welding regions 181 arranged at a preset transverse interval along the one direction in which the plurality of battery cells 110 are stacked, and at least one longitudinal welding region 182 arranged at a preset longitudinal interval in at least one of the plurality of transverse welding regions 181 along the height direction of the busbar.

For example, referring to FIG. 4, the plurality of welding regions 180 may be arranged in a 3-row by 3-column (3×3 pattern) and may be regions welded by spot welding. FIG. 4 illustrates an example where the transverse welding region 181 is provided in three pieces and the longitudinal welding region 182 is also provided in three pieces, but this may be varied in various ways.

Since at least one transverse welding region 181 and one longitudinal welding region 182 are sufficient, the plurality of welding regions 180 may be varied, such as in a 4-row by 2-column or 2-row by 5-column arrangement. Furthermore, unlike this, the plurality of welding regions 180 may also be arranged in the form of polygonal shapes such as triangles, pentagons, or star shapes that may not be represented by rows and columns.

That is, the plurality of welding regions 180 may be arranged in a polygonal shape with the centers of the plurality of welding regions 180 as respective vertices. Alternatively, the plurality of welding regions 180 may be arranged in a grid pattern with the plurality of welding regions 180 as vertices.

The size of the transverse interval and the size of the longitudinal interval may be the same. This is to better withstand external forces applied in any direction.

FIG. 5A illustrates an example of the coupled busbar frame 152, busbar 151, and sensing terminal unit 195. The sensing terminal unit 195 may be electrically connected to the sensing unit 191 and the busbar 151.

Specifically, FIG. 5A illustrates an example of the first busbar frame 1521, the first busbar plate 1511a, and the first sensing terminal 1951. The first sensing terminal 1951 may be electrically connected to the first wire 1911 and the first busbar plate 1511a.

At least a portion of the sensing terminal unit 195 is positioned to overlap the busbar 151, and at least another portion of the sensing terminal unit 195 is positioned to overlap the sensing unit 191. Specifically, at least a portion of the first sensing terminal 1951 may be positioned to overlap with the first busbar plate 1511a, and at least another portion of the first sensing terminal 1951 may be positioned to overlap with the first wire 1911.

At least a portion of the sensing terminal unit 195 may be positioned facing the busbar 151 and may include a coupling portion 196 that couples with the busbar 151. Specifically, at least a portion of the first sensing terminal 1951 may be positioned facing the first busbar plate 1511a and include a coupling portion 196 that couples with the first busbar plate 1511a.

After contacting the coupling portion 196 with the first busbar plate 1511a, the plurality of welding regions 180 may be welded to couple the coupling portion 196 to the first busbar plate 1511a. That is, the coupling portion 196 and the first busbar plate 1511a may be coupled to each other by spot welding the plurality of welding regions 180. Therefore, at this time, a plurality of welding beads 170 resulting from welding the plurality of welding regions 180 may be formed on the outside of the coupling portion 196.

Since the plurality of welding beads 170 result from the melting of the filler material used during welding or the melting of the base material, the positions of the plurality of welding beads 170 will be formed at locations corresponding to the plurality of welding regions 180. The plurality of welding beads 170 may be arranged in a polygonal or grid pattern, spaced apart from each other, similar to the plurality of welding regions 180.

The plurality of welding beads 170 may be circular in shape. If the plurality of welding regions 180 are located in the region between the coupling portion 196 and the first busbar plate 1511a, then the plurality of welding beads 170 will be formed to be exposed outward from the coupling portion 196.

FIG. 5B shows an enlarged view of a plurality of welding beads 170 formed on the coupling portion 196 during welding. Of course, the positions and intervals of the plurality of welding regions 180 may also be inferred from this.

Referring to FIG. 4, the battery module 200 may include plurality of welding regions 180 for coupling the first busbar plate 1511a and the first sensing terminal 1951. Specifically, spot welding is used, but the plurality of welding regions 180 may be arranged in a grid pattern or polygonal pattern by spot welding.

Referring to FIG. 5B, the plurality of welding beads 170 may include a plurality of transverse welding beads 171 arranged at a preset transverse interval L1 along the one direction in which the plurality of battery cells 110 are stacked, and a plurality of longitudinal welding beads 172 arranged at a preset longitudinal interval L2 along the height direction of the busbar from at least one of the plurality of transverse welding beads 171.

For example, referring to FIG. 5B, the plurality of welding beads 170 are arranged in a 3-row by 3-column (3×3 pattern), and such an arrangement may be formed by spot welding. FIG. 4 illustrates an example where three transverse welding beads 171 and three longitudinal welding beads 172 are provided, but this may be varied. That is, depending on how the plurality of welding regions 180 are arranged, the arrangement of the corresponding plurality of welding beads 170 will also differ.

Since it is sufficient if there is at least one of the transverse welding beads 171 and the longitudinal welding beads 172, the plurality of welding beads 170 may be varied, such as in a 4-row by 2-column or 2-row by 5-column arrangement. Furthermore, unlike this, the plurality of welding beads 170 may also be arranged in the form of polygons such as triangles, pentagons, or star shapes that may not be represented by rows and columns.

That is, the plurality of welding beads 170 may also be arranged in a polygonal shape with the centers of the plurality of welding beads 170 as each vertex. Alternatively, the plurality of welding beads 170 may be arranged in a grid pattern with the plurality of welding beads 170 as vertices.

As with the plurality of welding regions 180, the size of the transverse interval L1 and the size of the longitudinal interval L2 of the plurality welding beads 170 may be the same.

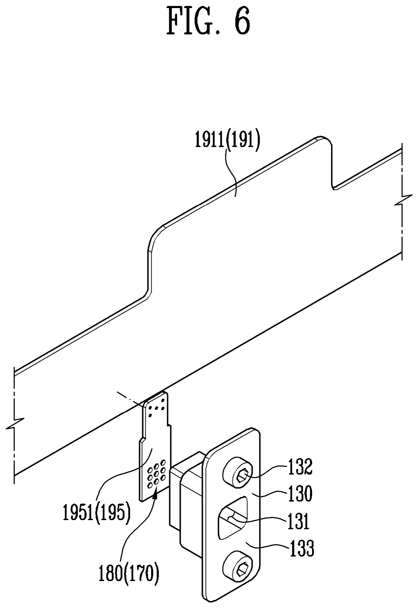

FIG. 6 illustrates the sensing unit 191, sensing terminal unit 195, and welding jig 130. Specifically, the first busbar plate 1511a and at least a portion of the first sensing terminal 1951, for example, the coupling portion 196 may be electrically connected to each other. In addition, the first wire 1911 and another portion of the first sensing terminal 1951 may be connected to the first wire 1911.

In particular, the battery module 200 may include a plurality of welding regions 180 where the busbar 151 and the sensing terminal unit 195, or the first busbar plate 1511a and the first sensing terminal 1951, are joined by welding. The plurality of welding regions 180 will be located on the surface facing the first busbar plate 1511a at the coupling portion 196. Furthermore, the coupling portion 196 may include a plurality of welding beads 170 formed during welding, corresponding to the arrangement of the plurality of welding regions 180, on the outside of the coupling portion 196.

Generally, for welding, the busbar 151 and the coupling portion 196 need to be in close contact before and during welding. Furthermore, it is necessary to prevent the scattering of spatter generated during welding. For this purpose, the battery module 200 may be pressed by a welding jig during welding of the coupling portion 196 and the busbar 151.

The welding jig 130 includes a welding body 133 that presses the sensing terminal unit 195 to tightly adhere it to the busbar 151 during welding, a welding through hole 131 penetrating the welding body 133, and a jig fastening hole 132 for fixing the welding body 133.

Since portions of the coupling portion 196 corresponding to the plurality of welding regions 180 are exposed through the welding through hole 131, the operator may weld the coupling portion 196 to the busbar 151 through the welding through hole 131, or the coupling portion 196 and the first busbar plate 1511a through the welding through hole 131.

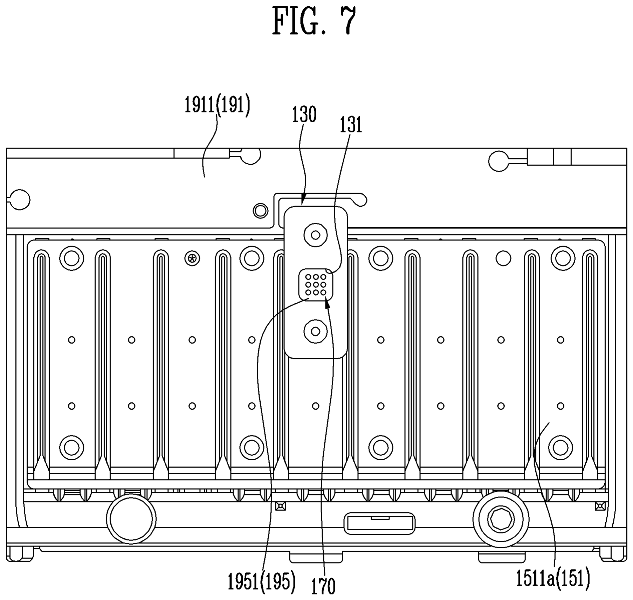

FIG. 7 illustrates an example of the welding jig 130 applying pressure to the coupling portion 196 and the busbar 151 for welding. Specifically, FIG. 7 is an example where the welding jig 130 presses the coupling portion 196 of the first sensing terminal 1951 and the first busbar plate 1511a before separating the welding jig 130 after welding.

For welding, the welding jig 130 may apply pressure so that the coupling portion 196 and the first busbar plate 1511a are pressed tightly together. The operator may access a plurality of welding regions 180 through the welding through hole 131 to weld the coupling portion 196 and the first busbar plate 1511a.

The plurality of welding beads 170 will be formed corresponding to the positions of the plurality of welding regions 180. By confirming the shape and number of the plurality of welding beads 170, it will be possible to verify whether the welding was performed properly.

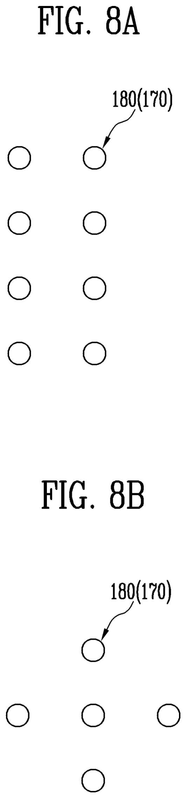

FIGS. 8A to 8C schematically illustrate various shapes of the plurality of welding beads 170 formed on the coupling portion 196. Furthermore, the positions of the corresponding plurality of welding regions 180 may also be indirectly determined from these.

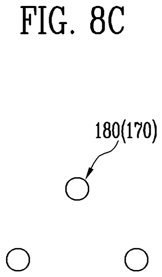

FIG. 8A illustrates an example where the plurality of welding beads 170 are formed and arranged in a 4-row by 2-column pattern. This is because the plurality of welding regions 180 are arranged in the same configuration. Fig. 8B illustrates an example in which the plurality of welding beads 170 are arranged in a cross (+) shape. This is because the plurality of welding regions 180 are arranged in the same cross (+) shape. FIG. 8C illustrates an example where the plurality of welding beads 170 are formed and arranged in a triangular shape. This is because the plurality of welding regions 180 are arranged in a triangular shape.

Therefore, the arrangement shape of the plurality of welding beads 170 may vary depending on the arrangement shape of the plurality of weld regions 180.

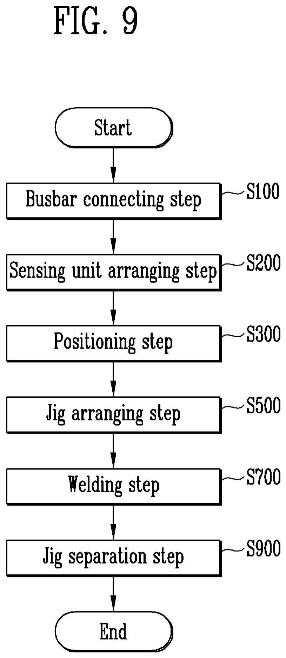

FIG. 9 is a flowchart schematically illustrating an example of an assembly method for the battery module 200.

The assembly method of the battery module 200 according to this disclosure may comprise: a busbar connecting step S100 of stacking the plurality of battery cells 100 along the one direction and connecting the plurality of battery cells to the busbar 151; a sensing unit arranging step S200 of arranging the sensing unit 191 on the plurality of battery cells 100 coupled to the busbar 151; a jig arranging step S500 of moving a welding jig 130 toward a coupling portion 196 positioned to face at least a portion of the busbar 151 among the sensing terminals and contacting the welding jig 130 with the coupling portion 196; and a welding step S700 of welding the coupling portion 196 and the busbar 151 using the welding jig through a welding through hole 131 penetrating the welding jig 130.

The busbar connecting step S100 refers to the step of electrically connecting the plurality of battery cells 110 and the busbar 151 after stacking the plurality of battery cells 110 along the one direction. In the busbar connecting step S100, the plurality of battery cells 110 will be connected in series or in parallel via the busbar 151.

The assembly method according to this disclosure may proceed to the sensing unit arranging step S200 after the busbar connecting step S100. In the sensing unit arranging step S200, the sensing unit 191 may be arranged on one surface of the plurality of battery cells 110. Preferably, the sensing unit 191 may be positioned on top of the plurality of battery cells 110.

In the jig arrangement step S500, the welding jig 130 may be moved toward the coupling portion 196. With the coupling portion 196 and the first busbar plate 1511a in contact, after the welding jig 130 contacts the coupling portion 196, the welding jig 130 may pressurize the coupling portion 196 and the first busbar plate 1511a.

Therefore, the assembly method for the battery module 200 may include, prior to the jig arrangement step S500, a positioning step S300 of the sensing terminal unit 195 such that a portion of the sensing terminal unit 195 overlaps with the busbar 151, specifically, the first sensing terminal 1951 overlaps with the first busbar plate 1511a. Through the positioning step S300, a portion of the coupling portion 196 may overlap the busbar 151 or the first busbar plate 1511a.

Through the welding step S700, the assembly method for the battery module 200 may form the plurality of welding beads on the outside of the coupling portion 196 by welding the plurality of welding regions 180 at the overlapping portion between the coupling portion 196 and the first busbar plate 1511a.

The plurality of welding regions 180 may be arranged at a preset interval as described above. Therefore, after the welding step S700, the plurality of welding beads 170 may be positioned corresponding to the plurality of welding regions 180 and exposed outward.

Preferably, the plurality of welding regions 180 may be arranged at the aforementioned interval along the stacking direction of the plurality of battery cells 110 or along the height direction of the busbar 151.

Subsequently, the assembly method for the battery module 200 may further include a jig separation step S900 after the welding step S700, wherein the welding jig 130 is separated from the coupling portion 196 or the cell stack 100. This is because the welding jig 130 is an auxiliary device for welding.

Since welding between the coupling portion 196 and the first busbar plate 1511a is performed inside the welding through hole 131, the welding jig 130 may reduce the scattering of spatter during welding. Furthermore, it may more effectively apply pressure to the overlapping portion between the coupling portion 196 and the first busbar plate 1511a.

The present disclosure may be practiced in various forms of modification and is not limited to the above-described embodiments. Therefore, if a modified embodiment includes the components of the claims of the present disclosure, it should be considered within the scope of the present disclosure.

## Claims

1. A battery module comprising:
a plurality of battery cells stacked along one direction;
a busbar electrically connected to the plurality of battery cells stacked along the one direction;
a sensing unit electrically connected to the busbar for detecting the voltage of at least one battery cell among the plurality of battery cells; and
a sensing terminal unit provided between the sensing unit and the busbar, electrically connecting the busbar and the sensing unit;
wherein the sensing terminal unit includes a coupling portion positioned to face at least a portion of the busbar and a plurality of welding regions connecting the coupling portion and the sensing terminal unit.

2. The battery module according to claim 1, wherein a plurality of welding beads are formed on the outside of the coupling portion corresponding to the plurality of welding regions when welding the coupling portion and the busbar.

3. The battery module according to claim 1, wherein a plurality of welding beads are formed at positions corresponding to the plurality of welding regions during welding and protrude outward from the coupling portion.

4. The battery module according to claim 2 or 3, wherein the plurality of welding beads are positioned spaced apart from each other.

5. The battery module according to claim 1, wherein the plurality of welding regions include:
a plurality of transverse welding regions arranged at a preset transverse interval along the one direction, and
at least one longitudinal welding region arranged at a preset longitudinal interval in at least one of the plurality of transverse welding regions along the height direction of the busbar.

6. The battery module according to claim 5, wherein the size of the transverse interval and the size of the longitudinal interval are the same.

7. The battery module according to claim 5, wherein a plurality of transverse welding beads are formed on the outside of the coupling portion at the transverse interval corresponding to the plurality of transverse welding regions when the sensing terminal unit and the busbar are welded, and at least one longitudinal welding bead is formed on the outside of the coupling portion at the longitudinal interval corresponding to the at least one longitudinal welding region when the sensing terminal unit and the busbar are welded.

8. The battery module according to claim 1, wherein the plurality of welding regions are arranged in a polygonal shape with the centers of the plurality of welding regions as respective vertices.

9. The battery module according to claim 1, wherein the plurality of welding regions are arranged in a grid pattern with the plurality of welding regions as vertices.

10. The battery module according to claim 1, wherein the busbar includes a first busbar and a second busbar provided on both sides of the battery cell;
the sensing unit includes a first wire electrically connected to the first busbar and a second wire electrically connected to the second busbar;
the sensing terminal unit includes a first sensing terminal connected to the first busbar by welding and a second sensing terminal connected to the second busbar by welding; and
wherein the plurality of welding regions includes a plurality of first welding regions joined together when the first sensing terminal and the first busbar are welded, and a plurality of second welding regions joined together when the second sensing terminal and the second busbar are welded.

11. The battery module according to claim 10, wherein a plurality of first welding beads are formed on the outside of the first sensing terminal corresponding to the plurality of first welding regions when the first sensing terminal and the first busbar are welded, and a plurality of second welding beads are formed on the outside of the second sensing terminal corresponding to the plurality of second welding regions when the second sensing terminal and the second busbar are welded.

12. The battery module according to claim 10, wherein the plurality of first welding regions and the plurality of second welding regions each include:
a plurality of transverse welding regions arranged at a preset transverse interval along the one direction, and
at least one longitudinal welding region arranged at a preset longitudinal interval in at least one of the plurality of transverse welding regions along the height direction of the busbar.

13. The battery module according to claim 12, wherein the first sensing terminal and the second sensing terminal each includes:
a plurality of transverse welding beads formed at the transverse intervals corresponding to the plurality of transverse welding regions on the outside of each of the first sensing terminal and the second sensing terminal when the first sensing terminal and the first busbar are welded or when the second sensing terminal and the second busbar are welded; and
a plurality of longitudinal welding beads formed at the longitudinal intervals corresponding to the plurality of longitudinal welding regions on the outside of each of the first sensing terminal and the second sensing terminal when the first sensing terminal and the first busbar are welded or when the second sensing terminal and the second busbar are welded.

14. The battery module according to claim 1, wherein the busbar includes a plurality of busbar plates electrically connecting a preset number of battery cells among the plurality of battery cells as a group, and the plurality of busbar plates are arranged along the one direction.

15. The battery module according to claim 14, wherein the sensing terminal unit is provided in a plurality corresponding one-to-one to the plurality of busbar plates.

16. The battery module according to claim 1, wherein the coupling portion and the busbar are pressed by a welding jig during welding.

17. The battery module according to claim 1, wherein the sensing unit includes a flexible printed circuit board.

18. A battery module assembly method, including a plurality of battery cells stacked along one direction, a busbar electrically connected to the plurality of battery cells stacked along the one direction, a sensing unit electrically connected to the busbar for detecting the voltage of at least one battery cell among the plurality of battery cells, and a sensing terminal unit provided between the sensing unit and the busbar, electrically connecting the busbar and the sensing unit, comprising:
a busbar connecting step of stacking the plurality of battery cells along the one direction and connecting the plurality of battery cells to the busbar;
a sensing unit arranging step of arranging the sensing unit on the plurality of battery cells coupled to the busbar;
a jig arranging step of moving a welding jig toward a coupling portion positioned to face at least a portion of the busbar among the sensing terminals and contacting the welding jig with the coupling portion; and
a welding step of welding the coupling portion and the busbar using the welding jig;
wherein the welding step includes welding the coupling portion and the busbar such that a plurality of joint regions by the welding are arranged at a preset interval.

19. The battery module assembly method according to claim 18, further comprising:
a jig separating step of separating the welding jig from the coupling portion after the welding step is completed.

20. The battery module assembly method according to claim 18, further comprising:
a positioning step of overlapping at least a portion of the busbar and the coupling portion for welding the coupling portion and the busbar prior to the jig arranging step.
